# EUROPÄISCHE PATENTSCHRIFT

(11) **EP 1 273 107 B1**
(45) Veröffentlichungstag und Bekanntmachung des Hinweises auf die Patenterteilung: **10.08.2005**
(21) Anmeldenummer: 01940138.9
(22) Anmeldetag: 10.04.2001
(51) Int. Cl.: H04B 7/005

(54) **VERFAHREN ZUR SENDELEISTUNGSREGELUNG IN EINEM FUNK-KOMMUNIKATIONSSYSTEM**
METHOD FOR REGULATING TRANSMISSION POWER IN A RADIOCOMMUNICATIONS SYSTEM
PROCEDE DE REGLAGE DE LA PUISSANCE D'EMISSION DANS UN SYSTEME DE RADIOCOMMUNICATION

(30) Priorität: 11.04.2000 DE 10017930
(43) Veröffentlichungstag der Anmeldung: 08.01.2003
(73) Patentinhaber: SIEMENS AKTIENGESELLSCHAFT, 80333 München (DE)
(72) Erfinder: DILLINGER, Markus, 81737 München (DE); GRONAU, Jürgen, 21514 Kankelau (DE); LÜDERS, Christian, 59872 Meschede (DE); QUENTE, Markus, 59581 Warstein (DE)
(86) Internationale Anmeldenummer: PCT/DE2001/001401
(87) Internationale Veröffentlichungsnummer: WO 2001/078251

(56) Entgegenhaltungen:
- EP-A- 0 548 939
- EP-A- 0 853 393

## Beschreibung

Die Erfindung betrifft ein Verfahren zur lastabhängigen Anpassung der Sendeleistungsregelung bei Paketdiensten in insbesondere einem Funk-Kommunikationsdienst mit W-CDMA sowie ein Funk-Kommunikationssystem zum Umsetzen des Verfahrens.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren (TD/CDMA: Time Division/Code Division Multiple Access) über die Funkschnittstelle, beispielsweise das UMTS (Universal Mobile Telecommunication System) oder andere Systeme der 3. Generation sind Frequenzen im Frequenzband von ca. 2000 MHz vorgesehen.

Das Ziel eines jeden Mobilfunkbetreibers ist es, in seinem Netz möglichst viele Teilnehmer bzw. einen möglichst hohen Gesamtdurchsatz an Daten pro Funkzelle mit dabei möglichst hoher Dienstgüte zu versorgen. Die Dienstgüte läßt sich dabei z.B. durch die maximal zulässige Bitfehlerrate bzw. bei Datendiensten durch den Durchsatz an Daten (in kBit pro Sekunde), der einem Teilnehmer mindestens gewährt werden muß, charakterisieren. Ein häufig in der Standardisierung verwendetes Qualitätsmaß lautet z.B., daß ein Teilnehmer bei bestimmten Paketdatendiensten (Unrestricted Delay Data Services UDD), mindesten 10% seines geforderten Nominaldurchsatzes erhalten muß, um nicht unzufrieden zu sein.

Bei zukünftigen Systemen wie dem UMTS kommt als Multiplexverfahren das sogenannte DS-CDMA- bzw. "Direct Sequence Code Division Multiple Access"-Verfahren zum Einsatz, also ein CDMA-Verfahren mit direkter Abfolge. Die Leistungsfähigkeit dieses Verfahrens, d.h. die Anzahl versorgbarer Teilnehmer bzw. der erzielbare Gesamtdurchsatz pro Funkzelle, hängt im entscheidenen Maße von einer optimal eingestellten schnellen Leistungsregelung (PC: Power Control) ab.

Typischerweise besteht eine solche Leistungsregelung aus einem schnellen inneren und geschlossenen Regelkreis (inner loop), jeweils in Aufwärtsverbindung (Uplink) und in Abwärtsverbindung (Downlink), und aus einer äußeren Regelschleife (outer loop). Nachfolgend soll eine Verbesserung des Regelverhaltens der äußeren Schleife erörtert werden, wobei insbesondere das Zusammenspiel der beiden verschiedenen Mechanismen für die Leistungsregelung zu betrachten ist.

Die äußere Regelschleife gibt den Sollwert für die schnelle innere Schleife vor. Dieser Sollwert wird aus der aktuell gemessenen Bitfehlerrate (BER: Bit Error Rate) oder Blockfehlerrate (BLER: Block Erasure Rate) und der erforderlichen Qualität bzw. dem angestrebten Verhältnis zwischen Signal und Interferenz (Target SIR: Signal-to-Interference-Ratio) mittels einer Differenzbildung abgeleitet.

Allgemein bekannt sind Verfahren, bei denen das Ziel-SIR aufgrund der gemessenen Bitfehlerraten bzw. aufgrund von Wiederholraten von Paketen angepaßt wird. Diese Verfahren versuchen das Ziel-SIR für jede einzelne Verbindung zu optimieren, dies jedoch ohne Rücksicht auf andere Verbindungen. Nachteilhaft ist dabei aber, daß sich Regelungsmaßnahmen an einer einzelnen Verbindung auf die Gesamtheit der Verbindungen auswirken und umgekehrt, so daß eine Optimierung der Leistungsregelung in der Praxis erschwert ist.

Der Erfindung liegt die Aufgabe zugrunde, ein Verfahren und ein Funk-Kommunikationssystem bereitzustellen, die eine bessere Kapazitätsoptimierung ermöglichen.

Diese Aufgabe wird durch das Verfahren mit den Merkmalen des Anspruchs 1, das Funk-Kommunikationssystem mit den Merkmalen des Anspruchs 12 bzw. Stationen gemäß Anspruch 13 für ein solches Kommunikationssystem gelöst.

Vorteilhafte Weiterbildungen sind Gegenstand von Unteransprüchen.

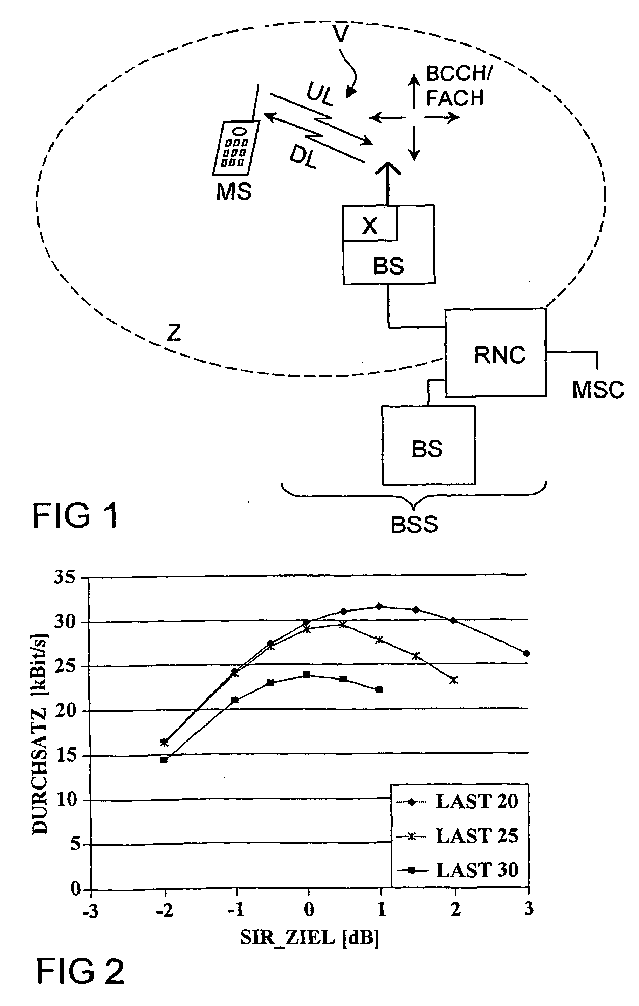

Allgemein erwartet wird, daß die Leistungsfähigkeit der Leistungsregelung zentral von einem optimal gewählten Ziel-SIR abhängt. Dieses kann durch Computersimulationen gezeigt werden. Ferner haben solche Simulationen gezeigt, daß das optimale Ziel-SIR nicht ein für eine gegebene Funkausbreitungsumgebung fester Wert ist, sondern von der im Funknetz herrschenden aktuellen Last abhängt (siehe auch Fig. 2).

Somit läßt sich die Kapazität eines CDMA-Funknetzes optimieren, wenn man das Ziel-SIR für die Leistungsregelung gemäß der gezeigten Simulationsergebnisse abhängig von der Systemlast einstellt.

Der Vorteil einer zentralen Komponente bei der Ziel-SIR Regelung ist das erhöhte Reaktionsvermögen des Netzes bei schnellen Laständerungen, z.B. wenn durch einen Handover ein hochratiger Datendienst in die Zelle gelangt.

Den gewünschten Verbindungsqualitätswert für eine oder mehrere einzelne Verbindungen zu verändern bietet den Vorteil, damit die mittlere Verbindungsqualität einer Vielzahl von Verbindungen im Gesamtsystem zu verbessern.

Überraschenderweise kann dabei die mittlere Verbindungsqualität der Vielzahl von Verbindungen sogar verbessert werden, obwohl der gewünschte Verbindungsqualitätswert für die einzelne Verbindung oder einen Teil der Vielzahl von Verbindungen verschlechtert wird.

Dabei kann der gewünschte Verbindungsqualitätswert für die einzelne Verbindung zum Verbessern der mittleren Verbindungsqualität der Vielzahl von Verbindungen je nach Betriebssituation im Gesamtsystem zu erhöhen oder zu erniedrigen sein.

Besonders vorteilhaft ist das zeitweilige Verändern des bzw. der gewünschten Verbindungsqualitätswerte für die einzelne Verbindung, eine Vielzahl von Verbindungen oder vorteilhafterweise alle Verbindungen gegenüber dem jeweils vermeintlich gewünschten Verbindungsqualitätswert um einen vorbestimmten, insbesondere geringen Betrag, da im Fall einer Verbesserung der mittleren Verbindungsqualität der Vielzahl von Verbindungen der jeweils gewünschte Verbindungsqualitätswert für die einzelne(n) Verbindung(en) entsprechend angepaßt werden kann. Im Fall einer Verschlechterung werden die gewünschten Verbindungsqualitätswerte für eine vorbestimmte Zeitdauer auf den ursprünglichen Wert zurückgesetzt oder vorteilhafterweise in der Gegenrichtung verändert.

Als gewünschten Verbindungsqualitätswert für die einzelne Verbindung einen gewünschten Signal-zu-Interferenz-Verhältniswert zu verwenden ermöglicht den Einsatz des Verfahrens bei nur minimalen Erweiterungen bereits bestehender Systeme zur Leistungsregelung. Insbesondere kann der gewünschte Verbindungsqualitätswert für die Regelung der Leistung in einem für sich bekannten schnell regelnden Regelkreis als Referenzwert verwendet werden.

Die Art der im System verwendeten Kommunikationsdienste und die Anzahl der Teilnehmer bzw. der bestehenden Verbindungen in einer Funkzelle wirken sich direkt auf die Last im System aus. Den gewünschten Verbindungsqualitätswert abhängig von der Last und/oder abhängig von anderen, direkt mit der Last zusammenhängenden Größen einer Vielzahl von Verbindungen oder aller Verbindungen auszuwählen ermöglicht zudem den Einsatz für sich bekannter Einrichtungen. So ist die Messung der Gesamtinterferenz als eine mit der Last zusammenhängende Größe bereits für sich genommen bekannt. Die Gesamtinterferenzwerte werden bisher jedoch für gänzlich andere Zwecke im Bereich der Managementplanung des Kommunikationssystems ermittelt.

Vorteilhafterweise werden gewünschte Verbindungsqualitätswerte für verschiedene Lastsituationen im System in einer Nachschlagtabelle (look up table) abgespeichert, der sie entsprechend entnommen werden können. Dabei kann die Nachschlagtabelle durch Simulationen und/oder durch Messungen tatsächlicher Verbindungen in einem ersten Verfahrensschritt erstellt werden. Besonders vorteilhaft ist auch, daß die Nachschlagtabelle auch während des Betriebs erstellt oder aktualisiert werden kann, so daß spätere Anpassungen an sich ändernde Bedingungen im System oder in einer Funkzelle berücksichtigt werden können.

Besonders einfach ist die Gestaltung und Handhabung der Werte der Nachschlagtabelle, wenn sie optimierte Verhältniswerte gewünschter Verbindungsqualitätswerte gegenüber einer im Betrieb gemessenen Verbindungsqualität - insbesondere Interferenz - der Vielzahl von Verbindungen enthält, da solche Werte in den bestehenden Standards bereits berücksichtigt sind und somit lediglich eine einfache Erweiterung der bestehenden Systeme und Geräte erforderlich ist. Dies gilt insbesondere auch für das Bestimmen der mittleren Verbindungsqualität der Vielzahl von Verbindungen durch Messungen des Gesamtdurchsatzes und der Dienstgüte der Vielzahl von Verbindungen bei zeitweiligen Variationen der vermeintlich idealen Werte zu deren Überprüfung.

Ein besonderer Vorteil des Verfahrens liegt darin begründet, daß normalerweise die äußere Regelschleife einer für sich bekannten Leistungssteuerung für die Qualität der einzelnen Verbindung verantwortlich ist. Da pro Verbindung ein eigener Algorithmus für die äußere Regelschleife aktiv ist, wird bei einer Lastveränderung dezentral jede Verbindung einzeln geregelt. Dies führt letztendlich zu einem sehr trägen Verhalten.

Durch die zentrale Einflußnahme des vorstehend aufgeführten Verfahrens kann jedoch auch sehr rasch auf die einzelnen Verbindungen eingewirkt werden. Zwar wird nicht für jede einzelne, jedoch aber für einen Großteil der Verbindungen eine bessere Qualität ermöglicht.

Stationen für ein Funk-Kommunikationssystem weisen zum Durchführen eines solchen Verfahrens zweckmäßigerweise eine Änderungseinrichtung zum Erfassen einer mittleren Verbindungsqualität einer Vielzahl von Verbindungen und zum Ändern der gewünschten Verbindungsqualitätswerte für deren individuelle(n) Verbindung(en) zum Verbessern der mittleren Verbindungsqualität einer Vielzahl eigener und/oder weiterer Verbindungen in ihrem Funkbereich auf.

Nachfolgend wird ein Ausführungsbeispiel anhand der Zeichnung näher erläutert. Es zeigen:
- Fig. 1: ein Blockschaltbild eines Funk-Kommunikationssystems, insbesondere eines Mobilfunksystems,
- Fig. 2: ein Diagramm zur Verdeutlichung des Verhältnisses von Durchsatz und Ziel-SIR bei Aufwärtsverbindungen, und
- Fig. 3: ein Blockschaltbild einer beispielhaften Realisierung der inneren und äußeren Regelschleife in einer Sende/Empfangseinrichtung einer Basisstation bzw. Teilnehmerstation.

Fig. 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren Basisstationssystemen BSS (BSS - Base Station Subsystem), die mit diesen Mobilvermittlungsstellen MSC verbunden sind. Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation BS (auch als Node B bezeichnet) auf. Eine Basisstation BS kann über eine Funkschnittstelle V, BCCH, FACH Verbindungen zu Kommunikations-Endgeräten bzw. Teilnehmerstationen MS, wie z.B. Mobilstationen oder anderweitigen mobilen und stationären Endgeräten, aufbauen. Durch jede Basisstation BS wird zumindest eine Funkzelle Z gebildet. Die Größe der Funkzelle Z wird in der Regel durch die Reichweite eines allgemeinen Signalisierungskanals (BCCH - Broadcast Control CHannel), der von den Basisstationen BS mit einer jeweils festgelegten und konstanten Sendeleistung gesendet wird, bestimmt. Bei einer Sektorisierung oder bei hierarchischen Zellstrukturen können pro Basisstation BS auch mehrere Funkzellen Z versorgt werden. Die Funktionalität dieser Struktur ist auf andere Funk-Kommunikationssysteme übertragbar, in denen die nachfolgend beschriebene Entwicklung zum Einsatz kommen kann.

Das Beispiel der Fig. 1 zeigt eine Teilnehmerstation MS, die als eine Mobilstation ausgestaltet ist. Die Teilnehmerstation MS hat eine Verbindung zu der Basisstation BS aufgebaut, auf der in Aufwärtsrichtung UL und Abwärtsrichtung DL eine Signalübertragung eines gewählten Dienstes erfolgt.

Die Steuerung der Sendeleistung der Basisstation BS führt die Teilnehmerstation MS mittels von Signalisierungsnachrichten (TPC-Kommandos) durch, in denen sie beispielsweise eine gemessene Variation der Übertragungseigenschaften in eine erforderliche Sendeleistungsänderung abbildet. Die Übertragungseigenschaften werden z.B. durch das Signal-zu-Interferenz-Verhältnis SIR und die Bitfehlerrate BER oder deren über ein Zeitintervall gemittelten Mittelwert BERavg charakterisiert. Als Zeitintervall für die Mittelwertbildung kann beispielsweise die Periodizität des äußeren Regelkreises "Outer Loop" gewählt werden. Als charakteristischer Wert BER werden beispielsweise Qualitätsbewertungen wie eine Bitfehlerrate BER oder eine Block- oder Rahmenfehlerrate BLER eingesetzt.

Für das Signal-zu-Interferenz-Verhältnis SIR werden bevorzugt funktechnische Meßgrößen wie eine Pfaddämpfung, eine Interferenzsituation am Ort der Teilnehmerstation MS sowie Kombinationen dieser Parameter eingesetzt. Die Variation der charakteristischen Werte BER und SIR kann ergänzend oder alternativ auch anhand des mit einer konstanten und der Teilnehmerstation MS bekannten Sendeleistung gesendeten allgemeinen Signalisierungskanals Broadcast-Kanal BCCH ermittelt werden. Ein gleiches Verfahren zur Steuerung der Sendeleistung der Teilnehmerstation MS führt die Basisstation BS durch. Nach einer entsprechenden Auswertung der Übertragungseigenschaften signalisiert sie der Teilnehmerstation MS eine Erhöhung oder Erniedrigung der Sendeleistung.

Das in Fig. 2 dargestellte Diagramm zeigt das Verhältnis von Durchsatz des Gesamtsystems und dem Ziel-SIR einer Aufwärtsverbindung beim UDD64-Dienst beim W-CDMA (Breitband-CDMA). Ein solches Diagramm kann insbesondere mittels Computersimulation oder im Betrieb durch entsprechende Langzeitmessungen erstellt werden. Wie aus den drei beispielhaften Kurven in dem Diagramm ersichtlich ist, muß der Wert des Ziel-SIR bei im Gesamtsystem steigender Last gesenkt werden, um einen möglichst hohen Durchsatz für die Gesamtheit der Verbindungen erzielen zu können. Umgekehrt kann der Wert der Ziel-SIR erhöht werden, wenn die Last gesamten System geringer wird, um einen möglichst hohen Durchsatz der Gesamtheit der Verbindungen erzielen zu können.

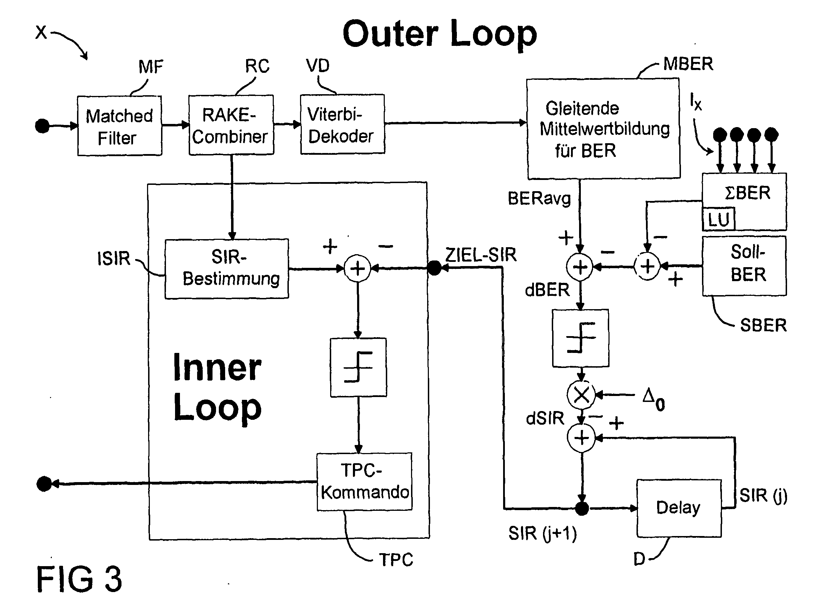

Wie nachfolgend auch zu der Fig. 3 erläutert, die ein Blockschaltbild zur Leistungsregelung für eine einzelne Verbindung darstellt, wird in einem Verfahren und einer Schaltung die äußere Regelschleife (Outer Loop) sowohl für die Sendeleistungsregelung der Basisstation BS als auch für die Sendeleistungsregelung der Teilnehmerstation MS genutzt.

In der äußeren Regelschleife der Basisstation BS und der Teilnehmerstation MS wird ein Zielwert eines Signal-Interferenz-Verhältnisses Ziel-SIR bzw. SIR-Target ermittelt und jeweils signalisiert. Der Zielwert des Signal-Interferenz-Verhältnisses Ziel-SIR stellt eine ausreichende Übertragungsqualität sicher und muß entsprechend den aktuellen Übertragungsbedingungen angepaßt werden. Die jeweilige innere Regelschleife (inner loop) kann dabei eine besonders schnelle Sendeleistungsregelung ausführen. Diese schnelle Sendeleistungsregelung erfolgt über TPC-Bit (TPC: Transmitter Power Control), die jeweils eine Erhöhung oder Erniedrigung der Sendeleistung um einen bestimmten Wert in dB bewirken.

In der Fig. 3 ist beispielhaft eine Realisierung der Kombination einer inneren Regelschleife und einer äußeren Regelschleife in einer Leistungsregelungseinrichtung X einer Sende/Empfangseinrichtung der Basisstation BS oder auch der Teilnehmerstation MS angegeben. Die empfangenen Signale werden in einem sogenannten Matched Filter MF gefiltert und einer Detektoreinrichtung RC zugeführt. In dem dargestellten Beispiel ist die Detektoreinrichtung RC als ein bekannter RAKE-Combiner ausgestaltet.

In der inneren Regelschleife wird aus den detektierten und von der Detektoreinrichtung RC zugeführten Signalen in einer SIR-Bestimmungseinrichtung ISIR ein Signal-Interferenz-Verhältnis SIR ermittelt. Das Signal-Interferenz-Verhältnis SIR dient der schnellen Sendeleistungsregelung als Basis für eine optimale Sendeleistungseinstellung, da die Interferenzsituation am Empfänger das wichtigste Kriterium für einen gesicherten Empfang der Signale darstellt.

In der äußeren Regelschleife werden die empfangenen Signale in einer der Detektoreinrichtung RC nachgeschalteten Dekodiereinrichtung VC, z.B. einem Viterbi-Decoder, dekodiert. Nachfolgend wird in einer Qualitätsbestimmungseinrichtung MBER ein für die jeweilige Verbindung charakteristischer Qualitätswert BER ermittelt. In der vorliegenden Schaltung erfolgt dabei eine Mittelung über einen charakteristischen Wert wie der Bitfehlerrate BER. Dieser charakteristische Wert BER wird in der äußeren Regelschleife anschließend mit einem Zielwert für den charakteristischen Qualitätswert Ziel-BER verglichen und es wird eine Differenz dBER der beiden Werte berechnet. Die Differenz dBER wird anschließend z. B. durch einen Wichtungsfaktor Δ₀ und andere, evtl. nicht-lineare Operationen in einen Korrekturwert dSIR für das Signal-Interferenz-Verhältnis umgerechnet. Daraufhin erfolgt eine Addition mit einem Zielwert für das Signal-Interferenz-Verhältnis SIR(j) eines vorangehenden Regelintervalls j. Der hierdurch entstehende aktuelle Zielwert für das Signal-Interferenz-Verhältnis SIR(j+1) bzw. Ziel-SIR wird in gleicher Weise mittels einer Verzögerungseinrichtung D um hier einen j-Schritt verzögert und anschließend für die Berechnung des nachfolgenden Zielwertes SIR(j+1) berücksichtigt. Der aktuelle Sollwert Ziel-SIR wird der inneren Regelschleife zugeführt und dient der schnellen Sendeleistungsregelung in der inneren Regelschleife als Basis für eine Erhöhung oder Erniedrigung der Sendeleistung durch eine Signalisierung von TPC-Bit. Je höher die Last im gesamten System ist, desto kleiner sollte der aktuelle Sollwert Ziel-SIR ausfallen.

Bei dem nachfolgend beschriebenen Verfahren wird das Ziel-SIR bzw. SIR-Target in einer Funkzelle Z abhängig von der im Netz herrschenden Last bzw. abhängig von anderen Größen, die direkt mit der Last zusammenhängen, eingestellt.

Die im Netz herrschende Last läßt sich i.a. nicht direkt bestimmen. Statt dessen wird, wie vorstehend beschrieben, von der Basisstation BS die Gesamtinterferenz ΣSIR gemessen und das Ziel-SIR wird abhängig von dieser Größe eingestellt. Das Messen der Gesamtinterferenz ΣSIR ist als solches im Standard bereits für die Ressourcenbereitstellung vorgesehen.

Die Einstellung des Ziel-SIR kann dabei durch Nachschlagtabellen LU, sogenannte Look-Up-Tables, vorgenommen werden. Diese Nachschlagtabellen LU enthalten optimierte Verhältniswerte von Ziel-SIR gegenüber einer gemessenen Interferenz SIR. Die Nachschlagtabellen LU können z.B. durch Simulationen gewonnen werden, wie sie zur Erstellung der Diagramme der Fig. 2 verwendet wurden.

Alternativ ist auch eine Erstellung und/oder Aktualisierung solcher Nachschlagtabellen LU durch Messungen der Werte bei repräsentativen Funkstationen BS, MS im laufenden Netzbetrieb möglich. Dazu kann beispielsweise in gewissen Phasen des Betriebs das Ziel-SIR gegenüber dem laut Simulation oder bestehender Nachschlagtabelle LU optimalen Wert in kleinen Schritten verschoben werden. Vorteilhafterweise werden dabei die Ziel-SIR-Werte von einer Vielzahl oder allen Verbindungen gleichzeitig um geringe Beträge verschoben. Dabei werden in diesen Phasen detaillierte Messungen des Gesamtdurchsatzes und der Dienstgüte durchgeführt. Steigen diese Größen bei der Variation, so ist das Ziel-SIR für die Gesamtheit der Verbindungen nicht mehr optimal und wird in einem nachfolgenden Schritt angepaßt. Im Rahmen der Anpassung kann insbesondere auch die Nachschlagtabelle LU korrigiert werden. Mit anderen Worten wird hier für einzelne Verbindungen eine schlechtere Verbindungsqualität in Kauf genommen, um letztendlich eine bessere Qualität für die Gesamtheit der Verbindungen zu erzielen.

Wie aus Fig. 3 ersichtlich, weist das Blockschaltbild zur Leistungssteuerung einen oder mehrere weitere Eingänge I_{X} auf, in die Werte der aktuellen Gesamtinterferenz bzw. der dazu proportionalen aktuellen Gesamtlast für eine Vielzahl oder vorzugsweise alle Verbindungen eingegeben wird. Mit der dabei ermittelten aktuellen Gesamtlast wird in die vorstehend beschriebene Nachschlagtabelle LU hineingegangen, um einen Korrekturwert für das Ziel-SIR zu bestimmen. Mit diesem Korrekturwert wird letztendlich über z.B. einen Addierer oder eine Multiplikationseinrichtung der Wert der Ziel-Bitfehlerrate verändert. Damit wird direkt die äußere und indirekt die innere Regelschleife beeinflußt.

Natürlich können insbesondere die letztgenannten Verfahrensschritte auch in einer einzigen Einrichtung erfolgen, die einen oder mehrere Eingänge für den bzw. die momentanen Lastwerte und eine oder mehrere Nachschlagtabellen LU zum Bestimmen eines geeigneten Sollwertes aufweisen, der dann mit dem jeweiligen Wert aus den Einrichtungen zur Bestimmung der Mittelwerte für die Bitfehlerrate oder dergleichen verarbeitet wird.

Zusammengefaßt ist festzustellen, daß gemäß dem vorstehenden Verfahren ein für den Idealfall gewünschter Verbindungsqualitätswert für eine einzelne Verbindung verändert, insbesondere verschlechtert wird, um die mittlere Verbindungsqualität einer Vielzahl von Verbindungen zu verbessern.

## Patentansprüche

1. Verfahren zur Sendeleistungsregelung von Stationen (BS, MS) in einem Funk-Kommunikationssystem zum Verwalten einer Vielzahl von Verbindungen (V) zwischen einzelnen, über eine Funkschnittstelle (V, BCCH, FACH) miteinander kommunizierenden Stationen (BS, MS), **dadurch gekennzeichnet, dass**
für jede einzelne Verbindung (V) zum Erzielen einer gewünschten Verbindungsqualität (SBER) ein entsprechender Verbindungsqualitätswert (Ziel-SIR) eingestellt wird, und
der Verbindungsqualitätswert (Ziel-SIR) für die einzelne Verbindung (V) zum Verbessern einer mittleren Verbindungsqualität (ΣBER) einer Vielzahl von Verbindungen (V) verändert wird.

2. Verfahren nach Anspruch 1, bei dem
der Verbindungsqualitätswert (Ziel-SIR) für die einzelne Verbindung (V) zum Verbessern der mittleren Verbindungsqualität (ΣBER) der Vielzahl von Verbindungen (V) verschlechtert wird.

3. Verfahren nach Anspruch 1 oder 2, bei dem
der Verbindungsqualitätswert (Ziel-SIR) für die einzelne Verbindung (V) zum Verbessern der mittleren Verbindungsqualität (ΣBER) der Vielzahl von Verbindungen (V) erhöht oder erniedrigt wird.

4. Verfahren nach Anspruch 3, bei dem
- der Verbindungsqualitätswert (Ziel-SIR) für die einzelne Verbindung (V), eine Vielzahl von Verbindungen oder alle Verbindungen gegenüber dem vermeintlich gewünschten Verbindungsqualitätswert (Ziel-SIR) zeitweilig um einen vorbestimmten, insbesondere geringen, Betrag verändert wird, und
- der Verbindungsqualitätswert (Ziel-SIR) für die einzelne(n) Verbindung(en) (V) entsprechend angepaßt wird, falls die mittlere Verbindungsqualität (ΣBER) der Vielzahl von Verbindungen (V) sich verbessert.

5. Verfahren nach einem vorstehenden Anspruch, bei dem
der Verbindungsqualitätswert (Ziel-SIR) für die einzelne Verbindung (V) ein gewünschter Signal-zu-Interferenz-Verhältniswert (SIR) ist.

6. Verfahren nach einem vorstehenden Anspruch, bei dem
der Verbindungsqualitätswert (Ziel-SIR) für die Regelung der Leistung in einem schnell regelnden Regelkreis als Referenzwert verwendet wird.

7. Verfahren nach einem vorstehenden Anspruch, bei dem
der Verbindungsqualitätswert (Ziel-SIR) abhängig von der Last und/oder abhängig von anderen, direkt mit der Last zusammenhängenden Größen, insbesondere der Interferenz, einer Vielzahl von Verbindungen (V) oder aller Verbindungen (V) ausgewählt wird.

8. Verfahren nach einem vorstehenden Anspruch, bei dem
der Verbindungsqualitätswert (Ziel-SIR) zumindest einer Nachschlagtabelle (LU) entnommen wird.

9. Verfahren nach Anspruch 8, bei dem
die zumindest eine Nachschlagtabelle (LU) durch Simulationen und/oder durch Messungen tatsächlicher Verbindungen in einem ersten Verfahrensschritt erstellt und/oder während des Betriebs aktualisiert wird.

10. Verfahren nach Anspruch 8 oder 9, bei dem
die zumindest eine Nachschlagtabelle (LU) optimierte Verhältniswerte gewünschter Verbindungsqualitätswerte (Ziel-SIR) gegenüber einer im Betrieb gemessenen Verbindungsqualität (ΣBER), insbesondere Interferenz (SIR), der Vielzahl von Verbindungen enthält.

11. Verfahren nach einem vorstehenden Anspruch, bei dem
zum Bestimmen der mittleren Verbindungsqualität (ΣBER) der Vielzahl von Verbindungen (V) Messungen des Gesamtdurchsatzes und der Dienstgüte der Vielzahl von Verbindungen (V) durchgeführt werden.

12. Funk-Kommunikationssystem zum Durchführen des Verfahrens nach Anspruch 1, mit einer Vielzahl von Stationen (BS, MS), die zumindest zum Teil aufweisen:
- zumindest eine Sende- und Empfangseinrichtung zum Aufbauen und Verwalten von Kommunikations-Verbindungen (V) über Funkschnittstellen (V, BCCH, FACH) zwischen einzelnen der Stationen (BS, MS),
- zumindest eine Regelungseinrichtung (X) zum Regeln der jeweiligen Sendeleistung,
- zumindest eine Speichereinrichtung (LU, SBER) zum Speichern und Bereitstellen von Verbindungsqualitätswerten (Ziel-SIR) zum Erzielen einer gewünschten Verbindungsqualität (SBER) für jede einzelne Verbindung (V), und
- eine Änderungseinrichtung (ΣBER, LU) zum Erfassen einer mittleren Verbindungsqualität (ΣBER) einer Vielzahl von Verbindungen (V) und zum Ändern der Verbindungsqualitätswerte (Ziel-SIR) für die einzelne Verbindung (V) zum Verbessern der mittleren Verbindungsqualität (ΣBER) einer Vielzahl von Verbindungen (V).

13. Station (BS, MS) für ein Kommunikationssystem nach Anspruch 13, **dadurch gekennzeichnet, daß** die Station eine Basisstation (BS) oder eine Datenendeinrichtung, insbesondere eine Mobilstation (MS), ist.

## Claims

1. Method for controlling the transmission power of stations (BS, MS) in a radio communication system for administering a multiplicity of connections (V) between individual stations (BS, MS) communicating with one another over a radio interface (V, BCCH, FACH), **characterized in that** a corresponding service level value (target SIR) is set for each individual connection (V) in order to achieve a required service level (SBER), and the service level value (target SIR) for the individual connection (V) is changed in order to improve an average service level (ΣBER) of a multiplicity of connections (V).

2. Method according to Claim 1, in which the service level value (target SIR) for the individual connection (V) is degraded in order to improve the average service level (∑BER) of the multiplicity of connections (V).

3. Method according to Claim 1 or 2, in which the service level value (target SIR) for the individual connection (V) is increased or decreased in order to improve the average service level (ΣBER) of the multiplicity of connections (V).

4. Method according to Claim 3, in which
- the service level value (target SIR) for the individual connection (V), a multiplicity of connections or all connections is temporarily changed by a predetermined, particularly small, amount compared with the supposedly required service level value (target SIR), and
- the service level value (target SIR) for the individual connection(s) (V) is correspondingly adapted if the average service level (∑BER) of the multiplicity of connections (V) improves.

5. Method according to a preceding claim, in which the service level value (target SIR) for the individual connection (V) is a required signal-to-interference ratio value (SIR).

6. Method according to a preceding claim, in which the service level value (target SIR) is used as reference value for controlling the power in a fast control loop.

7. Method according to a preceding claim, in which the service level value (target SIR) is selected in dependence on the load and/or in dependence on other quantities directly related to the load, particularly the interference, of a multiplicity of connections (V) or of all connections (V).

8. Method according to a preceding claim, in which the service level value (target SIR) is at least taken from a look-up table (LU).

9. Method according to Claim 8, in which the at least one look-up table (LU) is created by simulations and/or by measurements of actual connections in a first method step and/or is updated during operation.

10. Method according to Claim 8 or 9, in which the at least one look-up table (LU) contains optimized ratio values of required service level values (target SIR) compared with a service level measured in operation (ΣBER), particularly interference (SIR), of the multiplicity of connections.

11. Method according to a preceding claim, in which, in order to determine the average service level (ΣBER) of the multiplicity of connections (V), measurements of the total throughput
and of the quality of service of the multiplicity of connections (V) are performed.

12. Radio communication system for carrying out the method according to Claim 1, with a multiplicity of stations (BS, MS) which at least partially exhibit the following:
- at least one transmitting and receiving device for setting up and administering communication connections (V) via radio interfaces (V, BCCH, FACH) between individual ones of the stations (BS, MS),
- at least one control device (X) for controlling the respective transmission power,
- at least one storage device (LU, SBER) for storing and providing service level values (target SIR) for achieving a required service level (SBER) for each individual connection (V), and
- a changing device (ΣBER, LU) for detecting an average service level (ΣBER) of a multiplicity of connections (V) and for changing the service level values (target SIR) for the individual connection (V) in order to improve the average service level (ΣBER) of a multiplicity of connections (V).

13. Station (BS, MS) for a communication system according to Claim 13, **characterized in that** the station is a base station (BS) or a data terminal, particularly a mobile station (MS).

## Revendications

1. Procédé de réglage de la puissance d'émission de stations (BS, MS) dans un système de radiocommunication pour la gestion d'une pluralité de connexions (V) entre différentes stations (BS, MS) communiquant entre elles par l'intermédiaire d'une interface radio (V, BCCH, FACH), **caractérisé en ce qu'**une valeur de qualité de connexion (SIR cible) correspondante est réglée pour chaque connexion individuelle (V) pour obtenir une qualité de connexion souhaitée (SBER), et **en ce que** la valeur de qualité de connexion (SIR cible) pour une connexion individuelle (V) est modifiée pour améliorer une qualité de connexion moyenne (ΣBER) d'une pluralité de connexions (V).

2. Procédé selon la revendication 1, dans lequel
la valeur de qualité de connexion (SIR cible) pour une connexion individuelle (V) est altérée pour améliorer la qualité de connexion moyenne (ΣBER) de la pluralité de connexions (V).

3. Procédé selon la revendication 1 ou 2, dans lequel
la valeur de qualité de connexion (SIR cible) pour une connexion individuelle (V) est augmentée ou diminuée pour améliorer la qualité de connexion moyenne (ΣBER) de la pluralité de connexions (V).

4. Procédé selon la revendication 3, dans lequel
- la valeur de qualité de connexion (SIR cible) pour une connexion individuelle (V), pour une pluralité de connexions ou pour toutes les connexions est modifiée temporairement d'un montant prédéterminé, notamment faible, par rapport à la valeur de qualité de connexion (SIR cible) présumément souhaitée et
- la valeur de qualité de connexion (SIR cible) pour une/chaque connexion individuelle (V) est adaptée de manière correspondante, au cas où la qualité de connexion moyenne (ΣBER) de la pluralité de connexions (V) s'améliore.

5. Procédé selon une revendication quelconque précédente, dans lequel
la valeur de qualité de connexion (SIR cible) pour une connexion individuelle (V) est une valeur souhaitée du rapport signal/interférence (SIR).

6. Procédé selon une revendication quelconque précédente, dans lequel
la valeur de qualité de connexion (SIR cible) est utilisée comme valeur de référence pour le réglage de la puissance dans un circuit de réglage réglant rapidement.

7. Procédé selon une revendication quelconque précédente, dans lequel
la valeur de qualité de connexion (SIR cible) est sélectionnée en fonction de la charge et/ou en fonction d'autres grandeurs en relation directe avec la charge, notamment avec l'interférence, d'une pluralité de connexions (V) ou de toutes les connexions (V).

8. Procédé selon une revendication quelconque précédente, dans lequel
la valeur de qualité de connexion (SIR cible) est prise au moins dans un tableau de référence (LU).

9. Procédé selon la revendication 8, dans lequel
l'au moins un tableau de référence (LU) est créé dans une première étape de procédé au moyen de simulations et/ou de mesures de connexions réelles et/ou est actualisé pendant le fonctionnement.

10. Procédé selon la revendication 8 ou 9, dans lequel
l'au moins un tableau de référence (LU) comprend des valeurs de rapports optimisées de valeurs de qualité de connexion (SIR cible) souhaitées par rapport à une qualité de connexion (ΣBER) mesurée en service, notamment l'interférence (SIR), de la pluralité de connexions.

11. Procédé selon une revendication quelconque précédente, dans lequel
des mesures du débit total et de la qualité de service de la pluralité de connexions (V) sont exécutées pour déterminer la qualité de connexion moyenne (ΣBER) de la pluralité de connexions (V).

12. Système de radiocommunication pour la réalisation du procédé selon la revendication 1, comprenant une pluralité de stations (BS, MS) qui présentent au moins en partie :
- au moins un dispositif d'émission et un dispositif de réception pour établir et gérer des connexions de communication (V) par l'intermédiaire d'interfaces radio (V, BCCH, FACH) entre des stations (BS, MS) individuelles,
- au moins un dispositif de réglage (X) pour régler la puissance d'émission respective,
- au moins un dispositif de mémoire (LU, SBER) pour mémoriser et fournir des valeurs de qualité de connexion (SIR cible) afin d'obtenir une qualité de connexion souhaitée (SBER) pour chaque connexion individuelle (V), et
- un dispositif de modification (ΣBER, LU) pour saisir une qualité de connexion moyenne (ΣBER) d'une pluralité de connexions (V) et pour modifier les valeurs de qualité de connexion (SIR cible) pour une connexion individuelle (V) afin d'améliorer la qualité de connexion moyenne (ΣBER) d'une pluralité de connexions (V).

13. Station (BS, MS) pour un système de radiocommunication selon la revendication 13, **caractérisée en ce que** la station est une station de base (BS) ou un terminal de données, notamment une station mobile (MS).
